# EUROPÄISCHE PATENTSCHRIFT

(11) **EP 2 923 816 B1**
(45) Veröffentlichungstag und Bekanntmachung des Hinweises auf die Patenterteilung: **18.08.2021**
(21) Anmeldenummer: 15163092.8
(22) Anmeldetag: 10.12.2008
(51) Int. Cl.: B29C 49/42, B29C 33/30, B29C 33/34, B29C 49/36, B29C 49/06, B29C 33/00, B29C 49/48, B29C 49/66

(54) **VERFAHREN ZUM UMRÜSTEN EINER BLASMASCHINE**
METHOD FOR CUSTOMISING A BLOWING MACHINE
PROCÉDÉ DE RÉÉQUIPEMENT D'UNE SOUFFLEUSE

(30) Priorität: 16.01.2008 DE 102008004773
(43) Veröffentlichungstag der Anmeldung: 30.09.2015
(62) Teilanmeldung aus: 08171217.6
(73) Patentinhaber: Krones AG, 93073 Neutraubling (DE)
(72) Erfinder: Stoiber, Christian, 93073 Neutraubling (DE)
(74) Vertreter: Reichert & Lindner Partnerschaft Patentanwälte

(56) Entgegenhaltungen:
- DE-A1-102005 035 233
- DE-A1-102007 005 489
- US-A- 4 035 463
- US-B1- 6 447 281
- None

## Beschreibung

Die vorliegende Erfindung betrifft ein Verfahren zum Umrüsten einer Blasmaschine. Im Besonderen betrifft die Erfindung ein Verfahren zum Umrüsten einer Blasmaschine, die eine Vielzahl von mehrteiligen Formenträgern umfasst. Jeder der Formenträger hält eine mehrteilige Blasform.

Eine Blasmaschine wird insbesondere zum Streckblasen von Vorformlingen verwendet. Die Blasmaschine selbst umfasst dabei mindestens eine Blasform. Für das Streckblasen von Vorformlingen für Kunststoffflaschen werden Blasformen verwendet, in die ein Vorformling mit Überdruck im Innern der Blasform formgeblasen, d. h., auskonturiert wird. Die Blasform kann dabei z. B. zwei Formhälften umfassen, die um eine gemeinsame Achse drehbar gelagert sind. Durch Drehen um diese Achse können die Formhälften verschlossen werden, so dass sich im Inneren der durch die beiden Formhälften begrenzten Blasform ein Hohlraum bildet, in dem ein Vorformling formgeblasen werden kann. Die Ausgestaltung eines solchen Formträgers ist z. B. in der Europäischen Patentschrift EP 1 276 598 B1 offenbart.

Die Europäische Patentschrift EP 0 572 107 B1 offenbart einen Arbeitskopfwechsler für ein Rotationssystem zur Behandlung von Behältern. Das Rotationssystem umfasst einen drehbaren Körper zum Befördern von Behältern in einem bestimmten Intervall. Ebenso ist eine Vielzahl an Arbeitsköpfen vorgesehen, die in gleichen Abständen am Umfang des drehbaren Körpers beabstandet sind, um jeden der Behälter, die durch den drehbaren Körper befördert werden, einen Behandlungsvorgang zu unterziehen. Der Behandlungsvorgang kann z. B. einen Deckelaufsatzvorgang oder einen Einfüllvorgang umfassen. Es wird eine Verbindung zwischen dem drehbaren Körper und jedem Arbeitskopf hergestellt, um somit jeden Arbeitskopf auf den drehbaren Körper abnehmbar zu montieren. Der Arbeitskopfwechsler umfasst dabei eine Steuereinrichtung zum Steuern der Rotation des drehbaren Körpers, so dass jeder Arbeitskopf hintereinander und abwechselnd an einer vorbestimmten Arbeitskopfwechselstation gestoppt wird. Ebenso ist ein Arbeitskopfzufuhrmechanismus vorgesehen, der zur Entfernung eines Arbeitskopfes an der vorgesehenen Arbeitskopfwechselstation den entsprechenden Wechselvorgang durchführt. Nachdem der Arbeitskopf entnommen worden ist, kann an die dafür vorgesehene leere Stelle nunmehr ein neuer Arbeitskopf eingesetzt werden.

Die Deutsche Offenlegungsschrift DE 10 2005 035 233 A1 offenbart eine Vorrichtung zur Halterung von Blasformsegmenten sowie ein Verfahren gemäß dem Oberbegriff des Anspruchs 1. Die Blasformsegmente sind in einem Tragelement angeordnet. Die Blasformsegmente sind dabei mit mindestens einem Arretierelement lösbar im Tragelement fixierbar. Das Arretierelement ist sowohl zur Bereitstellung einer formschlüssigen Halterung, als auch zur Bereitstellung einer kraftschlüssigen Halterung für das jeweilige Blasformsegment ausgebildet. Zum Wechseln der Blasformsegmente, muss das Tragelement in entsprechender Weise geöffnet werden, so dass die entsprechenden Vorgänge für den Wechsel der Blasformsegmente an einer einzigen Position ausgeführt werden müssen.

Aufgabe der Erfindung ist, ein Verfahren zu schaffen, das eine Umrüstung einer Blasmaschine ermöglicht, so dass die Umrüstzeiten für das Umrüsten der Blasmaschine auf ein Minimum reduziert sind.

Die obige Aufgabe wird durch ein Verfahren gelöst, das die Merkmale des Anspruchs 1 umfasst.

Es ist von besonderem Vorteil, wenn für das Umrüsten einer Blasmaschine mindestens zwei Arbeitsbereiche vorgesehen werden, wobei an jedem Arbeitsbereich unterschiedliche Prozesse für das Umrüsten der Blasmaschine ausgeführt werden. Für das Umrüsten der Blasmaschine wird an mindestens einem Arbeitsbereich der Formenträger geöffnet. An einem anderen Arbeitsbereich werden die mehreren Teile der Blasform aus dem Formenträger entnommen und gegen eine Blasform eines anderen Typs ersetzt. Schließlich wird der Formenträger geschlossen. Es ist ebenfalls denkbar, dass das Öffnen des Formenträgers vor dem Eintreffen des Formenträgers am jeweiligen Arbeitsbereich erfolgt. Ebenso kann das Schließen des Formenträgers nach dem Verlassen des Arbeitsbereichs erfolgen. Hierzu wird ein Kurvenelement verwendet.

Ein Zeitaufwand für das Durchführen der Tätigkeit an jedem der Vielzahl der Arbeitsbereiche ist derart bemessen, dass der Zeitaufwand an jedem der Arbeitsbereiche etwa gleich groß ist. Dies hat den Vorteil, dass es bei dem Wechsel der Formenträger von mindestens einem Arbeitsbereich zum nächsten nicht zu Wartezeiten kommt. Wartezeiten sind dann erforderlich, wenn die Tätigkeiten an allen Arbeitsbereichen bis auf einen Arbeitsbereich abgeschlossen sind. Mit dem Wechsel muss auf den "langsamsten" Arbeitsbereich gewartet werden. Dies führt selbstverständlich zu einer nicht optimalen Ausnutzung der für die Umrüstung der Blasmaschine vorgesehenen Stillstandzeit.

Der Zeitaufwand an dem mindestens einen Arbeitsbereich zum Öffnen der Formenträger und zum Lösen der Medienverbindungen ist im Wesentlichen mit dem Zeitaufwand für das Entnehmen der Blasform, dem Ersetzen der Blasform und dem Schließen des Formenträgers und dem Verbinden der Medienzuführung gleich.

Es ist von besonderem Vorteil, wenn mindestens drei Arbeitsbereiche vorgesehen sind. An einem ersten Arbeitsbereich wird der Formenträger geöffnet und die Medienverbindung gelöst. An einem zweiten Arbeitsbereich werden die mehreren Teile der Blasform aus dem Formenträger entnommen und gegen eine Blasform eines anderen Typs ersetzt. An einem dritten Arbeitsbereich werden die Formenträger geschlossen und die Medienzuführung wieder verbunden.

Es ist ebenso denkbar, dass in dem ersten Arbeitsbereich ebenfalls die Befestigung für die Teile der Blasform gelöst werden. In dem dritten Arbeitsbereich können die Befestigungselemente für die Teile der Blasform wieder angezogen werden. Ebenso ist es denkbar, dass die Befestigungen für die Teile der Blasform in der Station gelöst und befestigt werden, in der die Teile der Blasform gegen Teile einer Blasform eines anderen Typs ausgetauscht werden.

Falls für den Austausch der Blasformen, bzw. für das Umrüsten der Blasmaschine drei Arbeitsbereiche vorgesehen sind, empfiehlt es sich, dass der Zeitaufwand an dem ersten Arbeitsbereich zum Öffnen der Formenträger und zum Lösen der Medienverbindungen im Wesentlichen dem Zeitaufwand für das Entnehmen der Blasform und Ersetzen der Blasform an dem zweiten Arbeitsbereich entspricht. Ferner muss der Zeitaufwand an dem dritten Arbeitsbereich für das Schließen des Formenträgers und dem Verbinden der Medienzuführung im Wesentlichen dem Zeitaufwand an dem ersten, bzw. zweiten Arbeitsbereich entsprechen. Es ist selbstverständlich, dass sich der Zeitaufwand im ersten Arbeitsbereich verringert, wenn das Öffnen der Formenträger bereits vor dem Eintreffen der Formenträger am ersten Arbeitsbereich erfolgt. Ebenso wird sich der Zeitaufwand für den denjenigen Arbeitsbereich verringern, wenn das Schließen des Formenträgers nicht in dem dafür vorgesehenen Arbeitbereich erfolgt.

An jedem der Arbeitsbereiche werden die vorgesehenen Prozesse automatisch ausgeführt.

Für das automatische Ausführen der Prozesse ist mindestens ein Roboter an dem entsprechendem Arbeitsbereich vorgesehen. Dieser Roboter führt zumindest einen Teil der Prozesse automatisch durch, die für das Umrüsten der Blasmaschine notwendig sind.

Es hat sich gezeigt, dass der Zeitaufwand zur Durchführung der Prozesse an den jeweiligen Arbeitsbereichen zwischen 20 und 60 Sekunden liegen soll.

Um für das Umrüsten einer Blasmaschine eine entsprechende Zeitersparnis zu erreichen und somit die Stillstandzeiten einer Blasmaschine während des Umrüstens zu reduzieren, ist es von Vorteil, wenn die Prozesse für das Umrüsten einer Blasmaschine an den verschiedenen Arbeitsstationen simultan durchgeführt werden. Der Wechsel der Formenträger von einem Arbeitsbereich zum nächsten Arbeitsbereich wird derart eingestellt, dass sich eine Taktzeit nach dem längsten an einem Arbeitsbereich benötigten Zeitaufwand richtet.

Die Formenträger sind an einer Transporteinrichtung angeordnet, wobei die Transporteinrichtung die Formenträger entsprechend der Taktzeit zwischen den Arbeitsbereichen wechselt.

Die Transporteinrichtung kann linear ausgestaltet sein. Ebenso ist es denkbar, dass die Transporteinrichtung als Rad ausgebildet ist, wobei das Rad die Vielzahl der Formenträger trägt.

Falls lediglich die Blasform eines anderen Typs eingesetzt werden muss und die Höhe der zu blasenden Flasche gleich bleibt, wird an dem Arbeitsbereich, an dem die Blasform eines anderen Typs eingesetzt wird, lediglich eine erste Blasformhälfte, eine zweite Blasformhälfte und ein Bodenteil der Blasform ausgetauscht. Weiterhin gibt es Fälle, bei denen nur die erste Blasformhälfte und die zweite Blasformhälfte ausgetauscht werden müssen, da auch die Bodenform gleich bleibt. Dies kommt häufig dann vor, wenn bei relativ einfachen Flaschen Standardböden Verwendung finden.

Falls sich zusätzlich zum Typ der Blasform auch die Höhe der zu blasenden Flasche ändert, wird an dem Arbeitsbereich, an dem die Blasform eines anderen Typs eingesetzt wird, eine erste Blasformhälfte, eine zweite Blasformhälfte, ein Bodenteil der Blasform und ein Streckbegrenzer ausgetauscht.

Der Austausch der Teile der Blasform erfolgt in einer Ausführungsform erst dann, wenn die Verrieglungen für die jeweiligen Teile der Blasform an dem Formenträger gelöst worden sind. Entsprechend ist nach dem Einsetzen der Teile in den Formenträger die Verriegelung wieder zu schließen. Die Tätigkeit kann automatisch oder manuell erfolgen. Eine andere Ausführungsform ist, dass die Teile der Blasform an dem Formenträger zunächst ohne eine Verriegelung gehaltert werden und dass die Verriegelung erst durch das Schließen des Formenträgers erfolgt. Ebenso wird die Verriegelung geöffnet, wenn der Formenträger geöffnet ist. Es liegt für einen Fachmann im herkömmlichen Fachwissen, wie die einzelnen Teile der Blasform im Formenträger zu befestigen und/oder zu lösen sind.

Im Folgenden sollen Ausführungsbeispiele die Erfindung und ihre Vorteile anhand der beigefügten Figuren näher erläutern.
**Figur 1** zeigt eine schematische Darstellung einer Blasmaschine, die mit einem Ofen verbunden ist, der der Blasmaschine die Vorformlinge mit einer definierten Temperatur zuführt.
**Figur 2** zeigt eine schematische Darstellung der drei Arbeitsbereiche, an dem die Prozesse für den Austausch der Blasformen durchgeführt werden.
**Figur 3** zeigt eine schematische Darstellung, bei der bereits an einem ersten Arbeitsbereich mit dem Umrüsten der Blasmaschine begonnen worden ist.
**Figur 4** zeigt die Situation des Umrüstens der Blasmaschine, bei der der im ersten Arbeitsbereich geöffnete Formträger zum zweiten Arbeitsbereich transportiert worden ist.
**Figur 5** zeigt die Situation, bei der im ersten Arbeitsbereich der neu angekommene Formträger geöffnet wird und bei der simultan im zweiten Arbeitsbereich die Blasformen, bzw. die Teile der Blasformen ausgetauscht werden.
**Figur 6** zeigt die Situation, bei der der Formträger, welcher mit den neuen Blasformeilen versehen ist, zum dritten Arbeitsbereich transportiert worden ist.
**Figur 7** zeigt die Situation, bei der der Formträger im dritten Arbeitsbereich wieder verschlossen worden ist.

Obwohl die nachfolgende Beschreibung des Verfahrens zum Umrüsten einer Blasmaschine sich auf drei Arbeitsbereiche beschränkt, soll dies nicht als eine Beschränkung der Erfindung aufgefasst werden. Es ist für einen Fachmann selbstverständlich, dass man eine Blasmaschine mit weniger als drei Arbeitsbereichen und mit mehr als drei Arbeitsbereichen ausstatten kann, an denen die Umrüstung einer Blasmaschine durchgeführt werden kann. Ebenso soll die Anzahl der auszutauschenden Teile der Blasform, bzw. des Streckbegrenzers (nicht dargestellt) nicht als Beschränkung der Erfindung aufgefasst werden. Die nachfolgende Beschreibung bezieht sich auf Teile der Blasform, die mit einer Medienzuführung verbunden sind. Dies ist lediglich eine von vielen Ausführungsformen. Je nach Anforderung der herzustellenden Kunststoffflasche sind alle Teile der Blasform mit einer Medienzuführung versehen oder mindestens nur ein bestimmter Teil der Blasform ist mit einer Medienzuführung versehen. Ferner sei darauf hingewiesen, dass in den verschiedenen Figuren für gleiche Elemente die gleichen Bezugszeichen verwendet werden.

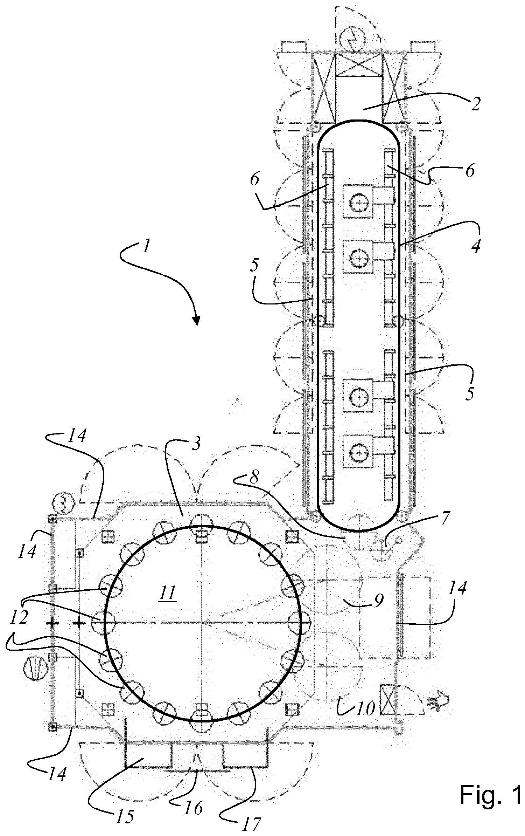

Figur 1 zeigt eine schematische Ansicht einer Vorrichtung, mit der Kunststoffflaschen im Wesentlichen durch ein Streckblasverfahren hergestellt werden können. Die Vorrichtung 1 besteht im Wesentlichen aus einem Ofen 2, in dem Vorformlinge für die herzustellenden Kunststoffflaschen auf eine bestimmte Temperatur gebracht werden, damit aus diesen Vorformlingen die Kunststoffflaschen im Blasverfahren, bzw. Streckblasverfahren hergestellt werden können. Mit dem Ofen 2 ist die Blasmaschine 3 verbunden. In dem Ofen 2 ist eine Fördereinrichtung 4 vorgesehen, die eine Vielzahl von Vorformlingen an einer Heizeinrichtung 5 vorbeiführt. Zum Inneren des Ofens 2 hin ist die Transporteinrichtung 4 mittels Wärme reflektierenden Kacheln 6 abgeschirmt. An einer Übergabeposition 7 werden die Vorformlinge in den Ofen 2 eingeleitet. An einer Ausgabeposition 8 werden die erwärmten Vorformlinge an eine Eingabeposition 9 für die Blasmaschine 3 übergeben. An einer Ausgabeposition 10 der Blasmaschine werden die fertigen Kunststoffflaschen zu einer weiteren Bearbeitung, bzw. zur Abfüllung (nicht dargestellt) ausgegeben.

In der in Figur 1 gezeigten Darstellung umfasst die Blasmaschine 3 eine Transporteinrichtung 11, an der die Vielzahl der Formenträger 12 angeordnet ist. In der hier gezeigten schematischen Darstellung der Blasmaschine 3 ist die Transporteinrichtung 11 als Rad ausgebildet. Es ist ebenso denkbar, dass die Transporteinrichtung 11 als im Wesentlichen lineare Transporteinrichtung ausgebildet ist. Die Blasmaschine 3 ist von mehreren Wänden 14 eingehaust. An mindestens einer Wand 14 der Blasmaschine 3 sind in der hier dargestellten Ausführungsform ein erster Arbeitsbereich 15, ein zweiter Arbeitsbereich 16 und ein dritter Arbeitsbereich 17 ausgebildet. An diesen Arbeitsbereichen 15, 16, 17 kann die Umrüstung der Blasmaschine 3 durchgeführt werden. Wie bereits erwähnt, kann die Umrüstung der Blasmaschine 3 an jedem der Arbeitsbereiche 15, 16 und 17 automatisch durchgeführt werden. Zu dieser automatischen Durchführung der Umrüstung der Blasmaschine 3 sind entsprechende Roboter oder konventionelle Handhabungsgeräte (nicht dargestellt) vorgesehen. Ebenso ist es denkbar, dass an dem einen oder dem anderen Arbeitsbereich die Umrüstung der Blasmaschine 3 manuell durchgeführt wird. Eine manuelle Durchführung der Umrüstung der Blasmaschine 3 an einem Arbeitsbereich empfiehlt sich dann, wenn der Aufwand für eine automatische Umrüstung der Blasmaschine 3 an diesem Arbeitsbereich einen nicht zu vertretenden Aufwand darstellt. Ob die Umrüstung der Blasmaschine 3 an den jeweiligen Arbeitsbereichen 15, 16 und 17 automatisch und/oder manuell durchgeführt wird, soll nicht als eine Beschränkung der Erfindung aufgefasst werden.

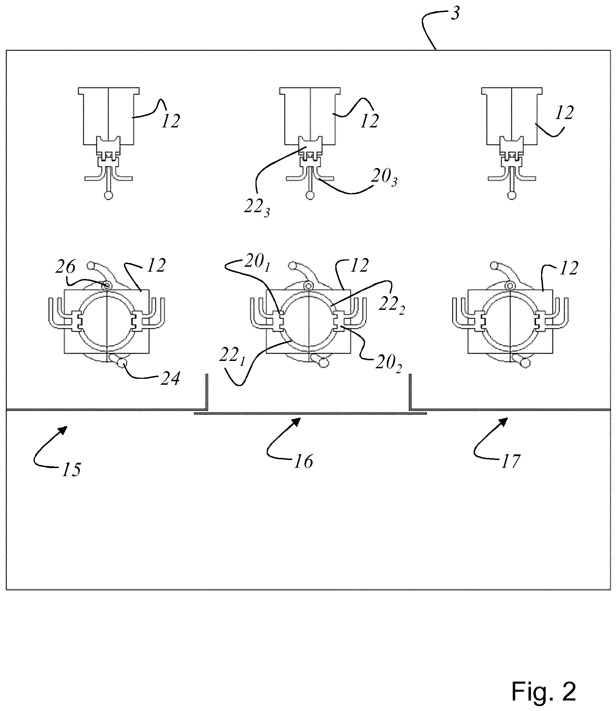

Figur 2 zeigt eine schematische Darstellung, bei der die Formenträger 12, welche innerhalb der Blasmaschine 3 angeordnet sind, den entsprechenden Arbeitsbereichen 15, 16 und 17 zugeordnet sind, damit eine entsprechende Umrüstung der Blasmaschine 3 durchgeführt werden kann. In den in den Figuren 2 bis 7 gezeigten Darstellungen wird zur besseren Verdeutlichung des Verfahrens der Formenträger 12 zum einen in der Draufsicht und zum anderen in einer Seitenansicht dargestellt. Der Formenträger 12 ist mehrteilig aufgebaut und trägt somit die mehrteilige Blasform 22, welche in der hier dargestellten Ausführungsform aus einem ersten Teil der Blasform 22₁, einem zweiten Teil der Blasform 22₂ und einem dritten Teil der Blasform 22₃ besteht. Der dritte Teil der Blasform 22₃ ist das Bodenteil, welches letztendlich die Bodenform der zu fertigenden Kunststoffflasche bildet. Der erste Teil der Blasform 22₁ ist mit einer entsprechenden Medienzuführung 20₁ verbunden. Ebenso ist der zweite Teil der Blasform 22₂ mit einer entsprechenden Medienzufuhr 20₂ verbunden. Auch der dritte Teil der Blasform 22₃ ist mit einer entsprechenden Medienzufuhr 20₃ verbunden. Da der Formenträger 12 anteilig aufgebaut ist, ist zur Verriegelung des Formenträgers 12 ein Verschlusselement 24 vorgesehen. Nachdem das Verschlusselement 24 gelöst worden ist, kann der Formenträger 12 geteilt werden. Zur Teilung des Formenträgers 12 kann dieser um eine Achse 26 auseinandergeschwenkt werden. Bei dem in Figur 2 dargestellten Verfahrensschritt wurde die Transporteinrichtung 4 der Blasmaschine derart gesteuert, dass jeweils einem der Arbeitsbereiche 15, 16 und 17 jeweils ein Formenträger 12 gegenüberliegt. Die Formenträger 12 sind in der in Figur 2 gezeigten Darstellung alle noch verschlossen.

Für die nachfolgende Beschreibung der einzelnen Verfahrensschritte für das Umrüsten der Blasmaschine 3 wird dabei auf die Bezeichnung der einzelnen Elemente des Formenträgers verzichtet, um die Übersichtlichkeit der nachfolgenden Figuren zu bewahren.

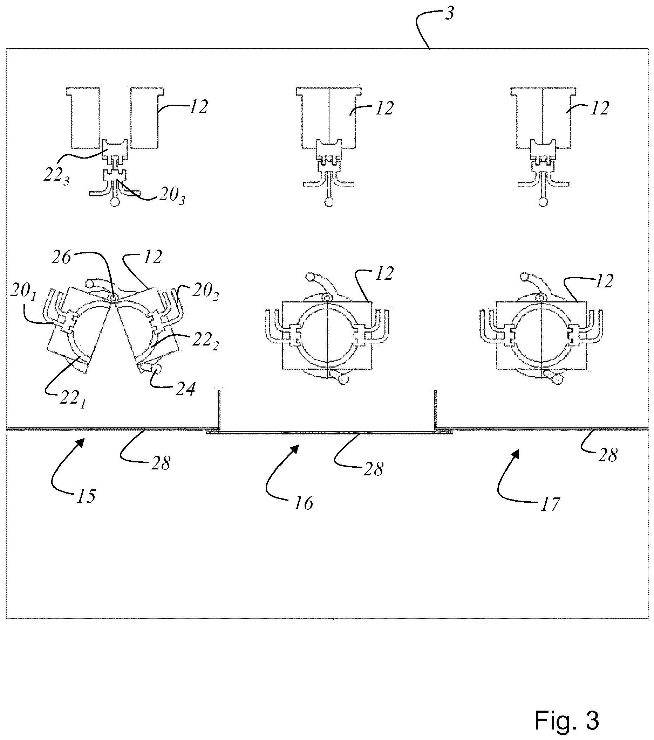

Figur 3 zeigt die Situation des erfindungsgemäßen Verfahrens für die Umrüstung einer Blasmaschine 3, bei der an dem ersten Arbeitsbereich 15 der Formenträger 12 um die Achse 26 auseinandergeschwenkt worden ist. Ferner wurden an diesem ersten Arbeitsbereich 15 die jeweiligen Medienzuführungen 20₁, 20₂ und 20₃ von den jeweiligen Teilen der Blasformen 22₁, 22₂ und 22₃ gelöst. Wie ebenfalls aus der Figur 3 ersichtlich ist, sind die jeweiligen Arbeitsbereiche 15, 16 und 17 mit einer entsprechenden Abschirmung 28 versehen. Diese Abschirmung 28 ist aus Gründen der Arbeitssicherheit vorgesehen.

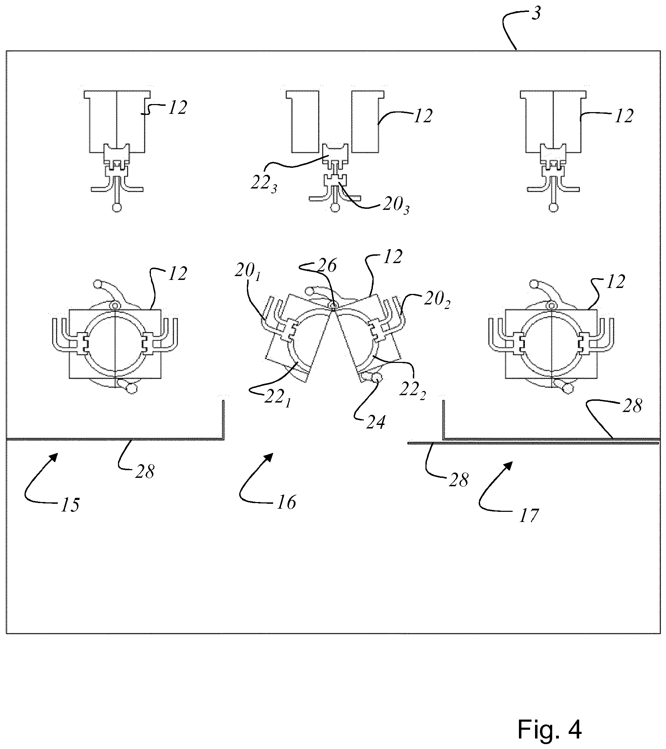

Figur 4 zeigt diejenige Situation des erfindungsgemäßen Verfahrens zum Umrüsten einer Blasmaschine 3, bei der die Transporteinrichtung 4 der Blasmaschine 3 die Formenträger 12 zu dem nächsten Arbeitsbereich transportiert hat. In Figur 4 befindet sich nun der in dem ersten Arbeitsbereich 15 geöffnete Formenträger am zweiten Arbeitsbereich 16. Damit im zweiten Arbeitsbereich 16 die Teile der Blasformen 22₁, 22₂ und 22₃ ausgewechselt werden können, wird hierzu die Abschirmung 28 des zweiten Arbeitsbereichs 16 entfernt, bzw. beiseite geschoben. Der sich im zweiten Arbeitsbereich 16 befindliche Formenträger 12 ist somit für die manuelle, bzw. automatische Handhabung des Prozesses für die Umrüstung der Blasmaschine 3 zugänglich.

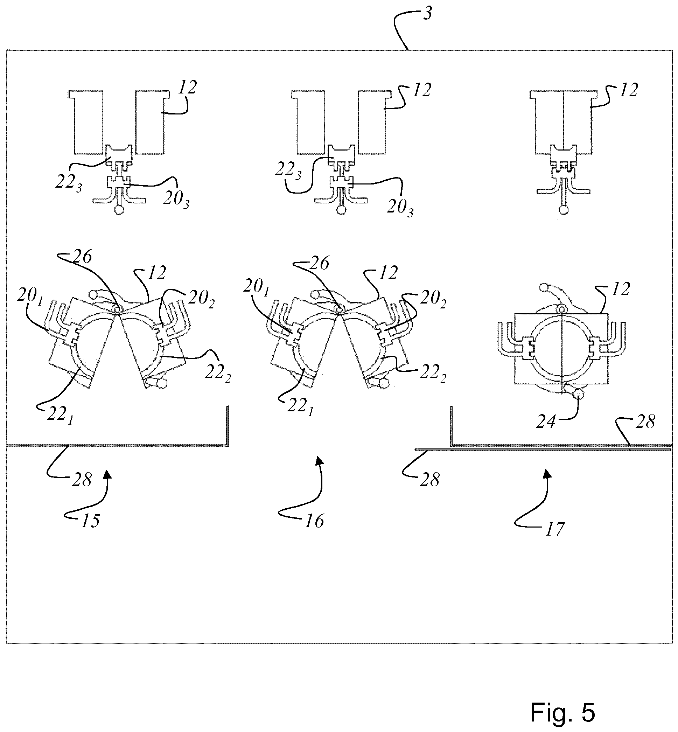

Figur 5 zeigt diejenige Situation des Verfahrens für die Umrüstung der Blasmaschine 3, bei der am ersten Arbeitsbereich 15 und am zweiten Arbeitsbereich 16 jeweils Prozesse am Formenträger 12 für die Umrüstung der Blasmaschine 3 ausgeführt werden. Während am zweiten Arbeitsbereich 16 die einzelnen Teile der Blasform 22₁, 22₂ und 22₃ ausgetauscht werden, wird am ersten Arbeitsbereich 15 der Formenträger 12 geöffnet und die Medienzuführungen 20₁, 20₂ und 20₃ gelöst. Die Abschirmung 28 vor dem zweiten Arbeitsbereich 16 ist entfernt, um den Austausch der Teile der Blasform 22₁, 22₂ und 22₃ zu ermöglichen. Es ist von besonderem Vorteil, wenn der Zeitaufwand für die Durchführung der Tätigkeiten im ersten Arbeitsbereich 15 und der Zeitaufwand für die Durchführung der Tätigkeiten im zweiten Arbeitsbereich 16 in etwa gleich sind.

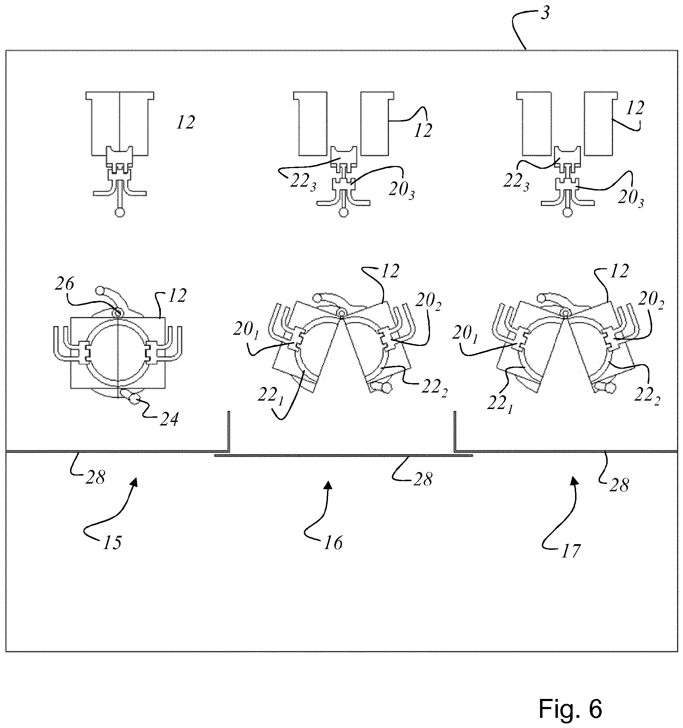

Figur 6 zeigt diejenige Situation des Verfahrens zum Umrüsten der Blasmaschine 3, bei der der Formenträger 12, welcher dem zweiten Arbeitsbereich 16 aus Figur 5 gegenüber gelegen hat, nun zu dem dritten Arbeitsbereich 17 transportiert worden ist. Der Weitertransport der Formenträger 12 von einem Arbeitsbereich zum nächsten Arbeitsbereich wird dann durchgeführt, wenn die Tätigkeiten, bzw. Prozesse an den jeweiligen Arbeitsbereichen 15, 16 und 17 abgeschlossen sind. Somit ist klar, dass sich die Taktzeit der Transporteinrichtung 4 an denjenigen Arbeitsbereich zu richten hat, der für die Durchführung der Tätigkeiten den größten Zeitaufwand benötigt. Am Optimalsten ist es, wenn der Zeitaufwand an jedem der Arbeitsbereiche für die Durchführung der dort erforderlichen Tätigkeiten gleich groß wäre. Dies würde zu einer optimalen Nutzung der Stillstandzeit der Blasmaschine 3 führen. In der in Figur 6 dargestellten Situation für das Verfahren zum Umrüsten der Blasmaschine 3 ist nun am ersten Arbeitsbereich 15 von der Transporteinrichtung 4 ein neuer und noch verschlossener Formenträger 12 eingeschränkt worden. An dem zweiten Arbeitsbereich 16 ist der geöffnete Formenträger 12 angekommen, von welchem nun die Teile der Blasformen 22₁, 22₂ und 22₃ ausgewechselt werden müssen. An dem dritten Arbeitsbereich 17 ist der geöffnete Formenträger 12 angekommen, der nun den anderen Typ der Blasform 22, bzw. Teile der Blasform 22₁, 22₂ und 22₃ trägt. Ferner sind am dritten Arbeitsbereich 17 die Medienzuführungen 20₁, 20₂ und 20₃ noch nicht mit den Teilen der Blasform 22₁, 22₂ und 22₃ verbunden.

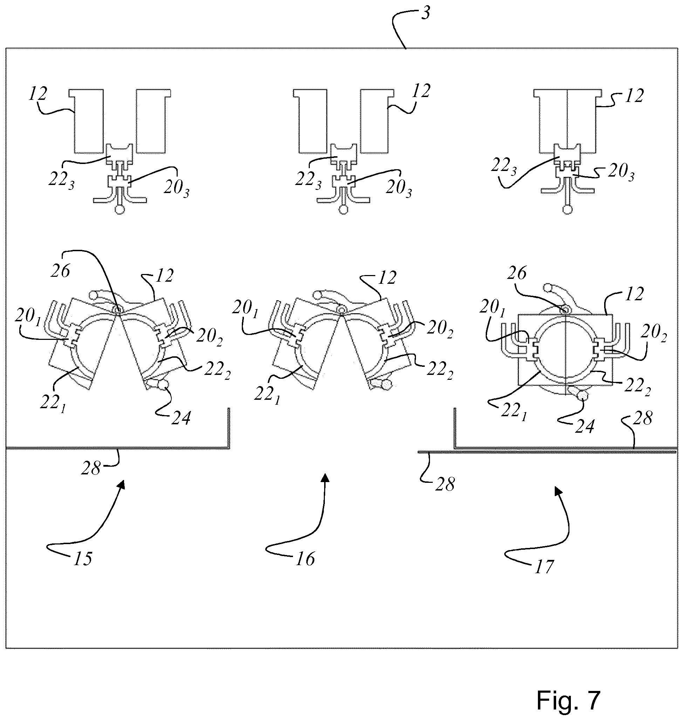

Figur 7 stellt diejenige Situation des Verfahrens zum Umrüsten einer Blasmaschine 3 dar, bei der an allen Arbeitsbereichen 15, 16 und 17 Tätigkeiten durchgeführt werden. Im ersten Arbeitsbereich 15 wird der Formenträger 12 geöffnet. Hierzu wird das Verschlusselement 24 gelöst und der Formträger um die Achse 26 geschwenkt und folglich geteilt. Ebenso werden die Medienzuführungen 20₁, 20₂ und 20₃ von den jeweils zugehörigen Teilen der Blasform 22₁, 22₂ und 22₃ gelöst. Simultan dazu wird am zweiten Arbeitsbereich 16 die Abschirmung 28 geöffnet und die Teile der Blasform 22₁, 22₂ und 22₃ gegen andere Teile eines anderen Typs einer Blasform ausgetauscht. Ebenfalls simultan zu den am ersten Arbeitsbereich 15 und am zweiten Arbeitsbereich 16 ablaufenden Prozessen, werden ebenfalls simultan am dritten Arbeitsbereich 17 Prozesse für das Umrüsten der Blasmaschine 3 durchgeführt. Am dritten Arbeitsbereich 17 wird der Formenträger 12 um die Achse 26 wieder zusammengeklappt und mit dem Verschlusselement 24 verschlossen. Ebenso werden am dritten Arbeitsbereich 17 die Medienzuführungen 20₁, 20₂ und 20₃ wieder mit den jeweiligen Teilen der Blasform verbunden. Die Transporteinrichtung 4 der Blasmaschine 3 führt nun so lange Formenträger 12 zu den jeweiligen Arbeitsbereichen 15, 16 und 17 zu, bis alle in der Blasmaschine 3 vorhandenen Formenträger 12 mit dem neuen Blasformtyp versehen sind. Durch das erfindungsgemäße Verfahren soll die aufgrund des Umrüstens der Blasmaschine 3 bedingte Stillstandzeit auf ein Minimum (z.B. 20 bis 60 Minuten) begrenzt sein.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

## Patentansprüche

1. Verfahren zum Umrüsten einer Blasmaschine (3), die eine Vielzahl von mehrteiligen Formenträgern (12) umfasst, von denen jeder eine mehrteilige Blasform (22) trägt, **gekennzeichnet durch** die folgenden Schritte:
▪ dass an der Blasmaschine (3) mindestens zwei Arbeitsbereiche (15, 16, 17) vorgesehen werden, wobei an jedem Arbeitsbereich (15, 16, 17) unterschiedliche Prozesse für das Umrüsten der Blasmaschine ausgeführt werden;
▪ dass vor oder an mindestens einem Arbeitsbereich (15) der Formenträger (12) geöffnet wird;
▪ dass an einem anderen Arbeitsbereich (16) die mehreren Teile der Blasform (22₁, 22₂, 22₃) aus dem Formenträger (12) entnommen werden und gegen Teile einer Blasform (22) eines anderen Typs ersetzt werden;
▪ dass die Formenträger (12) geschlossen werden;
▪ dass das Öffnen und/oder das Schließen der Formenträger (12) mittels eines Kurvenelements durchgeführt wird; und
▪ dass an jedem der mindestens zwei Arbeitsbereiche (15, 16, 17) die vorgesehenen Prozesse automatisch ausgeführt werden.

2. Verfahren nach Anspruch 1, wobei mindestens ein Teil der Blasform (22₁, 22₂, 22s) mit mindestens einer Medienzuführung (20₁, 20₂, 20₃) verbindbar ist und die mindestens eine Medienzuführung (20₁, 20₂, 20₃) am jeweiligen Arbeitsbereich (15, 16, 17) gelöst und wieder verbunden wird.

3. Verfahren nach Anspruch 2, wobei ein Zeitaufwand für das Durchführen der Tätigkeiten bei drei Arbeitsbereichen (15, 16, 17) derart bemessen ist, dass er etwa gleich groß ist, wobei der Zeitaufwand an dem ersten Arbeitsbereich (15) zum Öffnen der Formenträger (12) und zum Lösen der Medienzuführung (20₁, 20₂, 20₃) im Wesentlichen dem Zeitaufwand für das Entnehmen der Teile der Blasform (22₁, 22₂, 22₃) und Ersetzen der Blasform (22₁, 22₂, 22₃) an dem zweiten Arbeitsbereich (16) und im Wesentlichen dem Zeitaufwand für das Schließen des Formenträgers (12) und dem Verbinden der Medienzuführung (20₁, 20₂, 20₃) entspricht.

4. Verfahren nach Anspruch 1, wobei für das automatische Ausführen der Prozesse mindestens ein Roboter an dem entsprechenden Arbeitsbereich (15, 16, 17) vorgesehen ist.

5. Verfahren nach einem der Ansprüche 1 bis 4, wobei jeder Arbeitsbereich (15, 16, 17) mit einer entsprechenden Abschirmung (28) aus Gründen der Arbeitssicherheit versehen ist.

6. Verfahren nach einem der Ansprüche 1 bis 5, wobei die Prozesse an den Formenträgern (12) an den verschiedenen Arbeitsbereichen (15, 16, 17) simultan durchgeführt werden, und dass der Wechsel der Formenträger (12) von einem Arbeitsbereich zum nächsten Arbeitsbereich derart eingestellt wird, dass sich eine Taktzeit nach dem längsten an einem Arbeitsbereich benötigten Zeitaufwand richtet.

7. Verfahren nach Anspruch 6, wobei die Formenträger (12) an einer Transporteinrichtung (11) angeordnet sind, wobei die Transporteinrichtung (11) die Formenträger (12) entsprechend der Taktzeit zwischen den Arbeitsbereichen (15, 16, 17) wechselt.

8. Verfahren nach Anspruch 7, wobei die Transporteinrichtung (11) zumindest teilweise linear ausgestaltet ist.

9. Verfahren nach Anspruch 7, wobei die Transporteinrichtung (11) als Rad ausgebildet ist, auf dem die Vielzahl der Formenträger (12) angeordnet ist.

10. Verfahren nach Anspruch 1, wobei an dem Arbeitsbereich (16), an dem die Teile der Blasform (22₁, 22₂, 22₃) eines anderen Typs eingesetzt werden, eine erste Blasformhälfte (22₁), eine zweite Blasformhälfte (22₂) und ein Bodenteil (22₃) der Blasform (22) ausgetauscht werden, wenn die Höhe der zu blasenden Flasche gleich bleibt.

11. Verfahren nach Anspruch 1, wobei an dem Arbeitsbereich (16), an dem die Teile der Blasform (22₁, 22₂, 22₃) eines anderen Typs eingesetzt werden, eine erste Blasformhälfte (22₁), eine zweite Blasformhälfte (22₂), ein Bodenteil (22₃) der Blasform (22) und ein Streckbegrenzer ausgetauscht werden, wenn sich die Höhe der zu blasenden Flasche ändert.

## Claims

1. Method for customizing a blowing machine (3), comprising a plurality of multi-part mold carriers (12) each carrying a multi-part blow mold (22), **characterized by** the following steps:
in that at least two working areas (15, 16, 17) are provided on the blowing machine (3), wherein different processes for customizing the blowing machine are carried out at each working area (15, 16, 17);
in that the mold carrier (12) is opened before or at at least one working area (15);
in that at another working area (16) the plurality of parts of the blow mold (22₁, 22₂, 22₃) are removed from the mold carrier (12) and are replaced by parts of a blow mold (22) of a different type;
in that the mold carriers (12) are closed;
in that the opening and/or the closing of the mold carriers (12) is carried out by means of a cam element; and
in that at each of the at least two working areas (15, 16, 17) the intended processes are carried out automatically.

2. Method according to claim 1, wherein at least one portion of the blow mold (22₁, 22₂, 22₃) is connectable to at least one media supply (20₁, 20₂, 20₃) and the at least one media supply (20₁, 20₂, 20₃) is disconnected and reconnected at the respective working area (15, 16, 17).

3. Method according to claim 2, wherein a time required for carrying out the operations at three working areas (15,16,17) is sized to be approximately equal, wherein the time required at the first working area (15) for opening the mold carriers (12) and releasing the media supply (20₁, 20₂, 20₃) is substantially equal to the time required for removing the parts of the blow mold (22₁, 22₂, 22₃) and replacing the blow mold (22₁, 22₂, 22₃) at the second working area (16) and substantially equal to the time required for closing the mold carrier (12) and connecting the media supply (20₁, 20₂, 20₃).

4. Method according to claim 1, wherein at least one robot is provided at the corresponding working area (15, 16, 17) for the automatic execution of the processes.

5. Method according to one of claims 1 to 4, wherein each working area (15, 16, 17) is provided with a corresponding shield (28) for reasons of work safety.

6. Method according to one of claims 1 to 5, wherein the processes on the mold carriers (12) are performed simultaneously at the different working areas (15, 16, 17), and that the change of the mold carriers (12) from one working area to the next working area is adjusted in such a way that a cycle time is based on the longest time required at a working area.

7. Method according to claim 6, wherein the mold carriers (12) are arranged on a transport device (11), wherein the transport device (11) changes the mold carriers (12) between the working areas (15, 16, 17) according to the cycle time.

8. Method according to claim 7, wherein the transport device (11) is designed at least partially linearly.

9. Method according to claim 7, wherein the transport device (11) is designed as a wheel on which the plurality of mold carriers (12) is arranged.

10. Method according to claim 1, wherein a first blow mold half (22₁), a second blow mold half (22₂), and a bottom part (22₃) of the blow mold (22) are replaced at the working area (16) where the parts of the blow mold (22₁, 22₂, 22₃) of a different type are used when the height of the bottle to be blown remains the same.

11. Method according to claim 1, wherein a first blow mold half (22₁), a second blow mold half (22₂), a bottom part (22₃) of the blow mold (22) and a stretch limiter are replaced at the working area (16) where the parts of the blow mold (22₁, 22₂, 22₃) of a different type are used when the height of the bottle to be blown changes.

## Revendications

1. Procédé pour le rééquipement sur une machine de soufflage (3) comportant une pluralité de porte-moules (12) en plusieurs parties portant chacun un moule de soufflage (22) en plusieurs parties, **caractérisé en ce qu'**il comprend les étapes suivantes :
au moins deux zones de travail (15, 16, 17) sont prévues sur la machine de soufflage (3), des processus différents pouvant être exécutés dans chaque zone de travail (15, 16, 17) pour le rééquipement sur la machine de soufflage ;
le porte-moule (12) est ouvert avant ou sur l'au moins une zone de travail (15) ;
les plusieurs parties du moule de soufflage (22₁, 22₂, 22₃) sont retirées du porte-moule (12) dans une autre zone de travail (16) et remplacées par des parties d'un moule de soufflage (22) d'un autre type ;
les porte-moules (12) sont refermés ;
les porte-moules (12) sont ouverts et/ou fermés au moyen d'un élément formant une came ; et
les processus prévus sont exécutés automatiquement dans chacune des au moins deux zones de travail (15, 16, 17).

2. Procédé selon la revendication 1, dans lequel au moins une partie du moule de soufflage (22₁, 22₂, 22₃) peut être reliée à au moins une zone d'entrée de milieu (20₁, 20₂, 20₃) et l'au moins une zone d'entrée de milieu (20₁, 20₂, 20₃) peut être déconnectée et à nouveau raccordée à la zone de travail (15, 16, 17) correspondante.

3. Procédé selon la revendication 2, dans lequel un temps nécessaire à l'exécution des activités dans trois zones de travail (15, 16, 17) est dimensionné de façon à peu près égale, le temps nécessaire dans la première zone de travail (15) pour l'ouverture des porte-moule (12) et la déconnexion de la zone d'entrée de milieu (20₁, 20₂, 20₃) étant sensiblement égal au temps nécessaire pour retirer les parties du moule de soufflage (22₁, 22₂, 22₃) et remplacer le moule de soufflage (22₁, 22₂, 22₃) dans la deuxième zone de travail (16) et sensiblement égal au temps nécessaire pour fermer le porte-moule (12) et raccorder la zone d'entrée de milieu (20₁, 20₂, 20₃).

4. Procédé selon la revendication 1, dans lequel au moins un robot est prévu dans la zone de travail (15, 16, 17) correspondante pour l'exécution automatique des processus.

5. Procédé selon l'une des revendications 1 à 4, dans lequel chaque zone de travail (15, 16, 17) est munie d'un moyens de protection (28) correspondant pour des raisons de sécurité au travail.

6. Procédé selon l'une des revendications 1 à 5, dans lequel les processus sont exécutés simultanément sur les porte-moule (12) des différentes zones de travail (15, 16, 17) et en ce que le passage des porte-moule (12) d'une zone de travail à la zone de travail suivante est réglé de telle manière qu'une cadence se base sur le temps le plus long nécessaire dans une zone de travail.

7. Procédé selon la revendication 6, dans lequel les porte-moules (12) sont disposés sur un dispositif de transport (11), lequel dispositif de transport (11) fait passer les porte-moules (12) entre d'une zone de travail à l'autre (15, 16, 17) suivant la cadence.

8. Procédé selon la revendication 7, dans lequel le dispositif de transport (11) est de construction au moins partiellement linéaire.

9. Procédé selon la revendication 7, dans lequel le dispositif de transport (11) est conformé comme une roue sur laquelle la pluralité de porte-moules (12) est disposé.

10. Procédé selon la revendication 1, dans lequel, dans la zone de travail (16) où sont utilisées les parties des moules de soufflage (22₁, 22₂, 22₃) d'un autre type, une première moitié de moule de soufflage (22₁), une deuxième moitié de moule de soufflage (22₂) et une partie de fond (22₃) du moule de soufflage (22) sont remplacées si la hauteur de la bouteille à souffler reste la même.

11. Procédé selon la revendication 1, dans lequel, dans la zone de travail (16) où sont utilisées les parties des moules de soufflage (22₁, 22₂, 22₃) d'un autre type, une première moitié de moule de soufflage (22₁), une deuxième moitié de moule de soufflage (22₂), une partie de fond (22₃) du moule de soufflage (22) et un limiteur d'extension sont remplacés si la hauteur des bouteilles à souffler change.
